# EUROPEAN PATENT SPECIFICATION

(11) **EP 0 858 739 B1**
(45) Date of publication and mention of the grant of the patent: **16.04.2003**
(21) Application number: 98200096.0
(22) Date of filing: 16.01.1998
(51) Int. Cl.: A22C 17/04

(54) **Pre-cutter for deboning leg or wing parts of poultry**
Vorschneider zum Entbeinen der Beine oder Flügel von Schlachtgeflügel
Découpeur pour désosser les pattes ou ailes de volailles abattues

(30) Priority: 17.01.1997 NL 1005032
(43) Date of publication of application: 19.08.1998
(73) Proprietor: SYSTEMATE HOLLAND B.V., 3281 NC Numansdorp (NL)
(72) Inventor: Hazenbroek, Jacobus Eliza, 3286 LH Klaaswaal (NL); Wols, Floris, 3089 RD Rotterdam (NL); Van Vark, Leendert Izaak, 3297 GJ Puttershoek (NL)
(74) Representative: Ferguson, Alexander

(56) References cited:
- EP-A- 0 427 707
- EP-A- 0 439 784
- WO-A-93/09675
- DE-U- 9 300 745
- FR-A- 2 530 928
- US-A- 4 041 572
- US-A- 4 736 492
- US-A- 5 173 076
- US-A- 5 277 649

## Description

The invention relates to a deboning apparatus for leg or wing parts of poultry that is provided with a pre-cutter for deboning leg and/or wing parts of poultry, particularly so-called drumsticks especially of turkeys.

Deboning devices for leg or wing parts of poultry are known in various embodiments. In the American patent specifications 3.672.000, 4.327.463. 4.495.675, 4.736.492, 4.811.456 and 5.173.076 devices are described for filleting or deboning wing or leg parts, such as thighs and drumsticks, provided with scraping knives or scraping disks that define an opening through which the part to be deboned is led, to thereby scrape the meat off the bone.

An apparatus as described in the preamble of claim 1 is known from US-A-5.173.076.

Other similar deboning devices are obtainable through the applicant under the type designation MK40, MK80, D25, D30, D40 and D90. These automatic machines operate with the help of the so-called diaphragm principle, in which the bone is pushed out of the meat with the help of a pin.

In the non pre-published European patent application 97.200.019.4 in the name of applicant, the contents of which should be deemed as being inserted here, an improved deboning apparatus for leg parts, particularly thighs and drumsticks, of large poultry such as turkeys is described. This device comprises a chain-shaped conveyor revolving in a vertical plane and provided with a series of troughs extending transverse to the direction of conveyance. The conveyor runs over a small gear and a large gear spaced therefrom, and forms a depositing path section between both gears, where the leg parts can be placed by hand into the troughs.

A sliding assembly is arranged at each trough, comprising a sliding pin for transversely pushing away the bone and a sliding sleeve for transversely pushing away the meat. The large gear is provided with a series of meat scrapers revolving synchronous with the troughs, each formed by a scraping disk provided with a feed-through aperture for the bone. The large gear is further provided with a drum with curve tracks, with which the transverse movements of the sliding pin and the sliding sleeve are controlled. During revolution about the large gear, in the deboning path section, the course of the curve tracks effects that the sliding sleeve and the sliding pin press the leg part which rests on the trough against the scraping disk. Subsequently the sliding pin is further forced in transverse direction in order to force the bone - in the diaphragm manner - through the feed-through or scrape aperture. The meat is then clamped between the scraping disk and the sliding sleeve.

After the meat has thus been separated from the bone, the troughs are carried back underneath to the small gear in order to be brought by that to the depositing path section again.

Although the known deboning machines can operate reliably when deboning most parts of the legs (three-part) and wings (two-part), it happens that difficulties arise when deboning drumsticks of large poultry such as turkeys. The reason for this is that the attachment of the muscle tissue to the bone is such, that the scraping action along the bone is insufficient to completely separate the meat from the bone. In those cases a pre-cut is made by hand during depositing. However, this forms a complicating factor for the depositing process, which is more time-consuming as a result. In addition, the pre-cutting action entails a risk of injury for the operator.

A main object of the invention is to improve on this. For this purpose the invention provides an apparatus is described in claim 1.

With the pre-cutting apparatus according to the invention the drumsticks are pre-cut such, that scraping the meat along the bone can thereafter take place in a reliable manner. A conveying passage is left clear for the drumsticks, so that pre-cutting can take place during conveyance of the drumsticks to the deboning machine.

Preferably the severing means are adapted for severing the muscles on the bone of the leg part transversely and all around. By doing so the muscles are altogether freed from the bone at the bone end, as a result of which scraping can take place easily and securely.

Preferably the first and the second cutting means are formed by two circular knives, which are arranged successively and above one another - as seen in processing direction - in a vertical plane. The circular knives - as seen in processing direction - thus determine a more or less zigzag-shaped passage for a drumstick end, so that as a matter of course that is cut in when being fed past the knives. Preferably the knives are arranged such, that they are both transected by a same plane, which is parallel to the feed conveying direction of the drumsticks, particularly a horizontal plane.

In advantageous manner a guide is arranged at at least one of the circular knives, which guide is located at a radial distance therefrom, for pressing the drumstick against the circular knife concerned. By doing this the engaging pressure and the duration thereof can hereby be extended. The first cutting means - as seen in processing direction - can be arranged upstream and be lower than the second cutting means, and the said guide being arranged above the first cutting means. This engagement is further improved if the guide is spring biassed to the cutting means concerned up to a specified minimum distance thereto. In addition, it is advantageous if the guide extends for at least a portion of the part of the circumference of the circular knife of the first cutting means that faces the second cutting means.

In an advantageous manner the guide is bent with a curvature, the sign of which is equal to that of the curvature of the circular knife concerned.

The deboning apparatus is not exclusively intended for deboning drumsticks, but it is suitable for that. In an advantageous manner the pre-cutting apparatus according to the invention is arranged in such a way in the deboning apparatus that it can be brought outside the path of the parts to be deboned if the parts to be processed are not drumsticks. For that purpose the pre-cutting apparatus can be arranged on a separate frame which can be swung aside or removed.

If in the deboning apparatus the deboning path section ascends with regard to the depositing path section, the apparatus preferably comprises a pre-cutting apparatus as described earlier, in which first cutting means - as seen in processing direction - is arranged upstream and is lower that the second cutting means, in which the said guide is arranged at the first cutting means and the second cutting means is arranged to function in the concave area of the said transition. Hence the drumsticks are led along a large part of the circumference of the circular knife of the second cutting means, and it is ensured that the areas of the muscles facing upwards and backwards are severed. The cutting means will have to be arranged such that they do not collide with the conveyor, especially the supports for the parts or drumsticks. When depositing the drumsticks in the supports it will therefore have to be ensured that they protrude far enough to the side to be engaged by the cutting means. After they have been pre-cut, those projecting portions can, however, collide with the components of the deboning apparatus behind there, such as for instance the scraping knives described above, and/or can unnecessarily enlarge the space occupied in a transverse direction.

In order to offer a solution for this the invention provides, from another aspect, the deboning apparatus according to claim 1 further provided with means for shifting a leg part, in particular a drumstick, on the support concerned from a position projecting transverse from the support to a retracted, not or hardly projecting position.

In an advantageous manner the conveyor is provided with means for operating the shifting means. Hence the space taken up in transverse direction at the location of the shifting means can be limited.

The shifting means are preferably stationarily arranged with regard to the conveyor and are provided with a pressure plate which can be turned over from an outwardly tilted, non-active position to an inwardly tilted, active position.

In an advantageous manner the supports are each provided with an operating means for the turnable plate, the turnable plate being arranged to tilt under the influence of gravity from the active to the non-active position. The turnable plate is in that case preferably provided with an offset end portion for detaining the drumstick against upward movement with regard to the support.

The invention will now be described on the basis of an exemplary embodiment shown in the accompanying drawings in which
fig. 1 shows an overall view of a deboning apparatus for among other things poultry drumsticks, in which the pre-cutting apparatus according to the invention can be incorporated;
fig. 2 shows a schematic view of a pre-cutting apparatus according to the invention;
fig. 3 shows a schematic representation of the pre-cutting apparatus of figure 2, during pre-cutting;
fig. 4 shows an exemplary embodiment of an apparatus according to the invention for sliding the pre-cut drumsticks back onto a support; and
fig. 5 shows a schematic view of a drumstick that can be processed with the apparatuses according to the invention.

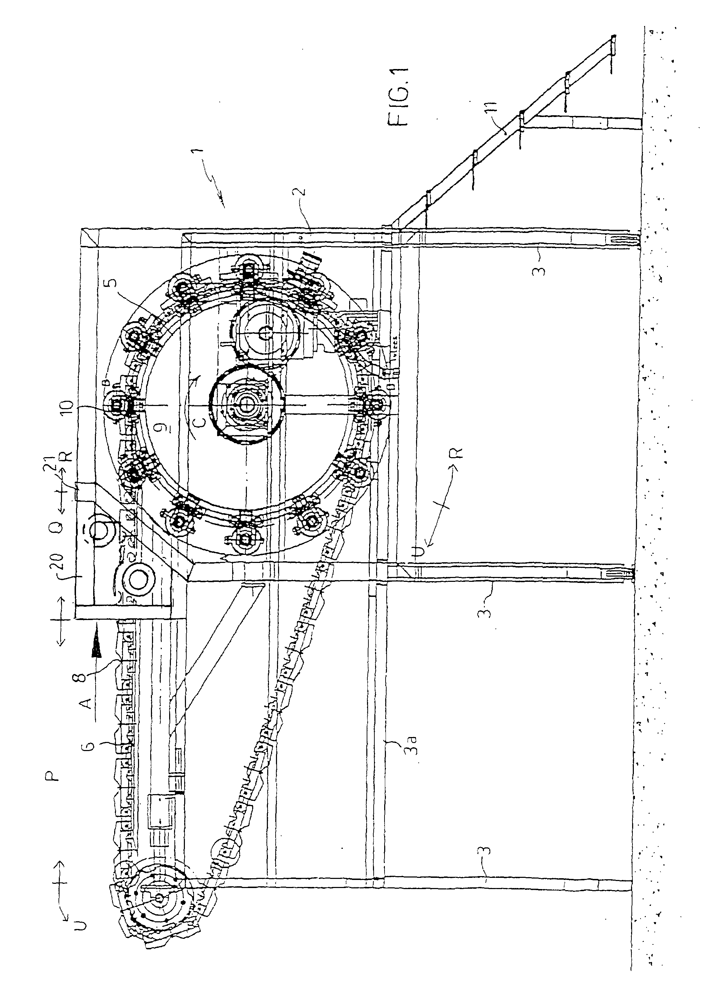

The filleting or deboning machine 1 which is shown in figure 1 comprises a frame 2 that is built up of steel posts and horizontal members 3 and in which a small gear 4 and a large gear 9 are arranged, over which an endless conveyor chain 6 is moved in the directions A and C. The conveyor shown is also subject of the non pre-published European patent application 97.200.019.4. The frame 2 further comprises a platform 3a, which is intended for supporting operators, who can access the platform via stairs 11.

The chain 6 runs around via a depositing path section P, a transition path section Q, a deboning path section R and a return path section U, for instance at a speed of 40 links per minute.

A number of diaphragm-forming scraper disks 10 rotate along with the large gear 9 in the direction C, which scraper disks - as seen in the drawing - are arranged in front of the transport chain 6. An equal number of clamping/bone-ejecting assemblies rotate along with the large gear 9 in the direction C and are located on the other side of the transport chain 6. The clamping/bone-ejecting assemblies are provided with cams which project radially inwardly and engage in curve tracks on a fixed drum 5. The cams and the components of the clamping/ejecting assemblies connected thereto are arranged such that they are slidable perpendicular to the plane of drawing, back and forth to the scraping disks 10. This, too, is described at length in the said European patent application of applicant.

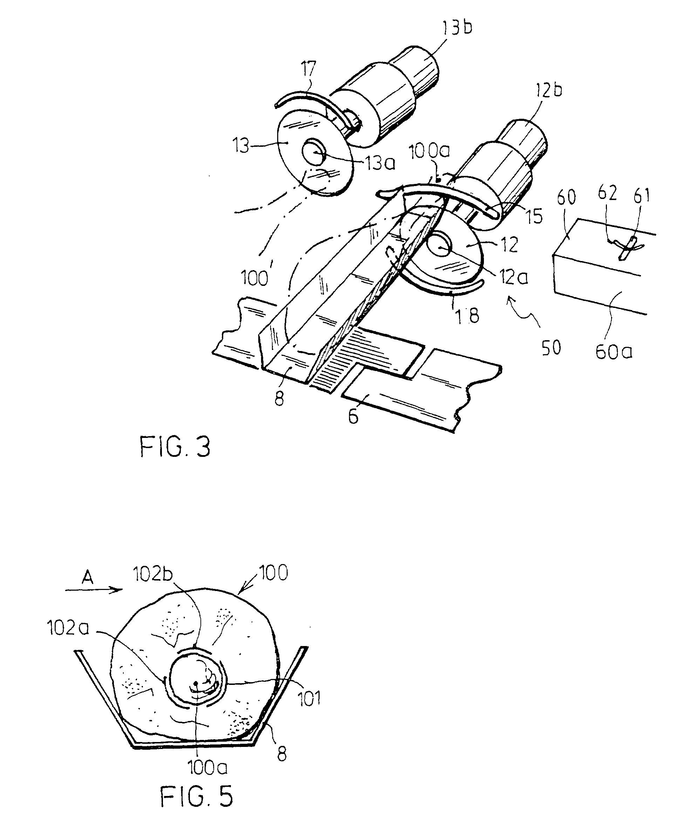

The transport chain 6 is provided with blocks or links 14, on which transverse troughs 8 are supported. These transverse troughs 8 serve to support in each case one part of a poultry leg or wing. In the present case the support of a drumstick 100 (see for instance figure 3) of a turkey in particular is at issue. These drumsticks 100 are characterised by a relatively thick proximal end and a relatively thin distal end. As shown in figure 5 at the distal end 100a there are located in succession, as seen in circumferential direction, a set of bunched or clustered muscles 101, which are relatively flexible, a wide muscle 102a and another wide muscle 102b. The pre-cutting apparatus according to the invention is intended for transversely severing all these muscles near the thin end, so that separating the meat from the bone of the drumstick 100, for instance with the deboning machine shown in figure 1, takes place in a reliable manner. As can be seen in figure 5, the drumsticks are laid with their thin longitudinal end on the troughs 8.

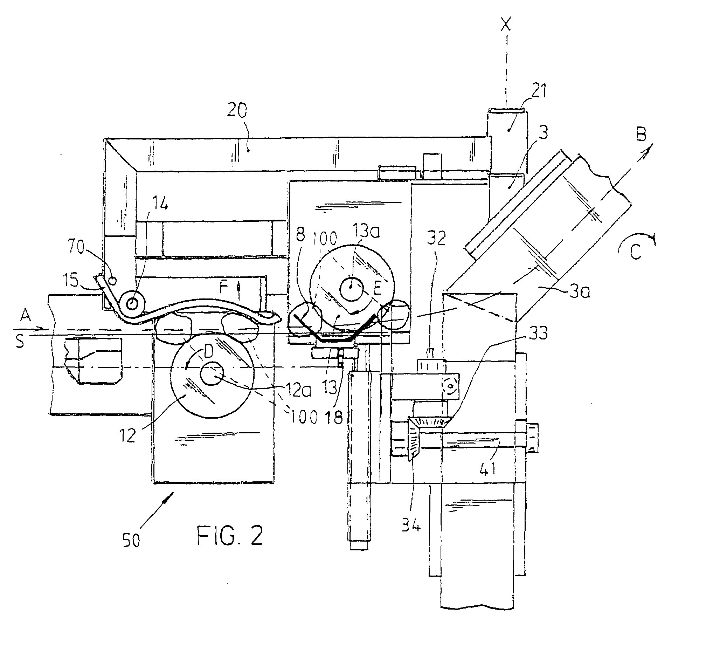

For that purpose the deboning machine shown in figure 1 is provided with a pre-cutting apparatus 50, which is arranged on a frame 20 that is attached at the location of pivot bush 21 to the frame 2 to be hingeable about a vertical axis (see figure 2). When no drumsticks are being handled by the machine 1, the frame 20 can be swung away horizontally or be removed from the frame 2, in which case the frame 20 is removably arranged on the frame 2.

Attached to frame 20 are, among other things, a first circular knife 12 and a second circular knife 13, which are rotatable in the directions D and E, respectively, by means of drive shafts 12a, 13a. These are driven by motors 12b and 13b, respectively. The circular knives 12 and 13 are arranged such that they intersect or contact the horizontal plane S (see figure 2) with their cutting edge. The circular knives and their drives are mounted in such a way to the frame 20, that their position is adjustable in height to take up an optimum position for each drumstick size. Above the first circular knife 12 located in the front and at the bottom a guide 15 is arranged, which has a curvature that corresponds approximately to the curvature of the edge of a circular knife 12 and which is biassed downwards against upward displacement in the direction F by means of a torsion spring at the location of 14. In this way it is achieved that with a suitable basic setting of the spacing between the guide 15 and the edge of the circular knife 12, both thick and thin drumstick ends 100a will be pre-cut in the correct way by knife 12, and that the ends 100a will be forced somewhat against the circular knife 12, so that the rear side too is accessible to the knife. Downward movement of the guide 15 beyond the initial position is impeded by the stop 70: in this way a determined minimum distance between the knife edge and the guide is ensured. In addition, shielding rods 17 and 18 are arranged for safety reasons.

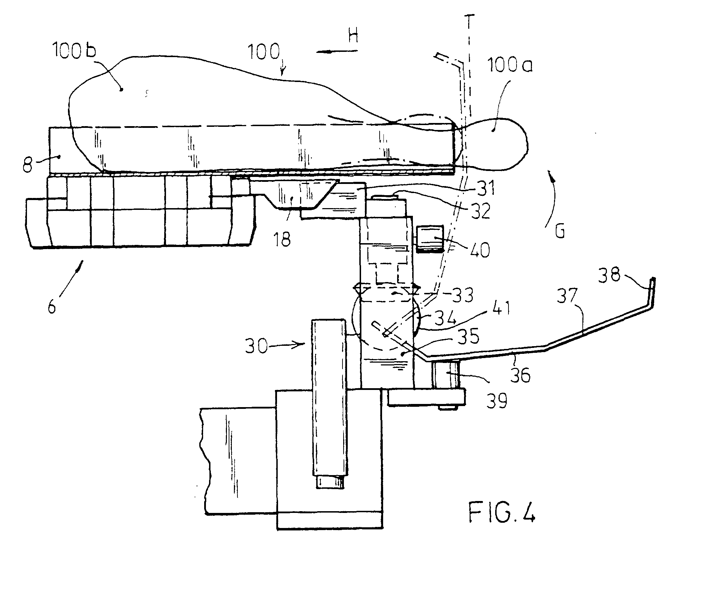

As can be seen in figure 5, the drumsticks are laid in such a way in the troughs 8 that the bunched muscles 101 face forward and downward. Because the guide 14 also presses the end 100a against the edge of the circular knife 12 somewhat, it is achieved that these bunched muscles are, for the most part, severed when passing along the circular knife 12, in plane T (see figure 4). Moreover, as is shown in figure 2, the wide muscle 102a is severed by circular knife 12. The upper portion of the bunched muscle 101 is then severed by the second circular knife 13 and subsequently the second wide muscle 102b. Severing the muscles located at the rear above is further promoted in that the transport chain, as opposed to what is shown in figure 1, is diverted in the transition path Q and does not extend anymore in the direction A but is upwardly inclined in the direction B (see figure 2). This path coincides almost immediately with the revolving path C of the large gear.

In the transition area between the path in the direction A and the path in the direction B, immediately after the second circular knife 13, there is a mechanism with which the drumstick end 100a, which projects during pre-cutting from the end edge of the trough 8, can be pushed back.

When positioning the drumsticks in the troughs 8 in the depositing path section P, such that the ends 100a project far enough to be engaged by the circular knives 12 and 13, use can be made of an aid which is formed by an adjustable stop attached to a horizontal member 3 of the frame 2, which member extends in front of and parallel to the transport chain 6, at the location of the horizontal depositing path section. This stop can for instance be formed by an angle section 60 (see figure 3), which is provided with a pair of transverse slots 61 (one of which is shown), through which pins 62 extend which themselves extend into holes in the said horizontal member 3 and with which the section 60 can be secured. The offset, downwardly depending portion of the angle section then serves as stop. During depositing of the drumsticks the operator places the end 100a against the portion 60a of the angle section and then causes the thick end of the drumstick to slant downwards into the trough 8, with the thin longitudinal side facing down.

The links 7 of the transport chain 6, on which the troughs 8 are attached, are provided on a side facing the operating side with a fixed pawl 18, as shown in figure 4. This pawl 18 extends far enough to abut a stationary lever 31, which, for the purpose of rotating along, is fixed to a vertical pin 32 of the turnable mechanism 30 that is located, as far as space is concerned, in an advantageous fashion substantially below the path of the drumsticks and the troughs. The pivot pin 32 is borne in block 35, which is fixedly attached to the frame 20, so that the turn-up mechanism follows the state of the pre-cutting apparatus discussed above. At its lower end the pivot pin 32 is provided with a cone-shaped gear 33 that engages in cone-shaped gear 34 that is attached to a horizontal pivot pin 41, which is also borne in the block 35. In addition, a stainless steel plate 36 is attached on the pivot pin 41 for rotation therewith, which plate, under the influence of gravity, is usually located in the position shown by the full lines and then rests on fixed support 39.

If a support 8 with a drumstick 100 has just passed the second circular knife 13, and the drumstick end 100a has been cut just behind the end knobble to free the muscles from the bone (according to the schematically shown cutting plane T, as is shown in figure 4), then the pawl 18 will abut lever 13 and take it along, on account of the driving force exerted on the transport chain 6, so that the pivot pin 32 will be rotated, and, via the cone-shaped gears 33 and 34, the horizontal pivot pin 41 too, and the plate 36 will thereby be swung upwards in the direction G until it abuts the fixed stop 40. During that movement the plate part 37 will abut the end of the drumstick end 100a and slide the drumstick 100 further onto trough 8 in the direction H. Here the stop 40 ensures that the plate part 37 does not abut the moving trough 8. The plate 36 is further provided with an offset end portion 38 at the end, with which the end 100a of the drumstick 100 is prevented from going above the upper edges of the trough 8 and then, as a consequence of the friction between drumstick 100 and plate 36, from coming to rest on/in the trough 8 with the end 100a inclined to the rear, in which case the position of the drumstick 100 is incorrect for further processing in the deboning machine.

In the position of the plate 36 shown by a dot-and-dash lines the lever 31 is rotated to such an extent that the pawl 18 can move along it. In addition, it is of importance that the plate portion 37 is of such a length (in the plane of drawing) and breadth (perpendicular to the plane of drawing) that a somewhat upwardly inclined movement in the transition area of direction A to direction B does not lead to a reduced engagement between the plate portion 37 and the end 100a.

## Claims

1. Apparatus (1) for deboning leg or wing parts of poultry, in particular turkeys, comprising an endless conveyor (6) for the said parts, which conveyor is provided with a plurality of supports (8), one for each part, which supports are disposed transverse to the direction of conveyance, and comprises a depositing path, a deboning path and return path, in which the deboning apparatus is further provided with deboning means moving along with the conveyor, which - as seen in processing direction - are disposed to the side of the supports, and with means for bringing the leg parts into engagement with the deboning means, a pre-cutting apparatus comprising means (12,13) for transversely severing the muscles, in particular the tendons thereof, near the attaching end on the bone of the leg part, in particular the drumstick, wherein the severing means comprise first cutting means (12) for severing the muscles on a first part of the circumference of the bone and second cutting means (13) for severing the muscles at a complementary second part of the circumference of the bone, **characterized in that** the pre-cutting apparatus (50) is disposed at the location of the transition between the depositing path and the deboning path and that the first cutting means (12) are arranged to engage at least a lower part of the circumference of the bone and the second cutting means (13) are arranged to engage at least an upper part of the bone.

2. Apparatus according to claim 1, in which the severing means (12,13) are adapted for severing the muscles on the bone of the leg part transversely and all around, in particular near the distal end of the bone.

3. Apparatus according to claim 1 or 2, in which the first and the second cutting means (12,13) are formed by two circular knives, which are arranged successively - as seen in processing direction - and above one another in a vertical plane and preferably in such a manner that the same horizontal plane (S) contacts both knives or transects them.

4. Apparatus according to claim 3, in which a guide (15) is arranged at at least one of the circular knives (12), which guide is located at a radial distance therefrom, for pressing the leg part against the circular knife concerned.

5. Apparatus according to claim 4, in which the first cutting means (12) - as seen in processing direction - is arranged upstream and is lower than the second cutting means (13), and in which the said guide (15) is arranged above the first cutting means.

6. Apparatus according to claim 4 or 5, in which under the action of a spring (14) the guide (15) is biassed to the cutting means (12) in question up to a specified minimum distance thereto.

7. Apparatus according to claim 6, in which the guide (15) extends in processing direction to beyond the rotating axis (12a) of the first cutting means (12), preferably for at least a portion of the part of the circumference of the circular knife of the first cutting means that faces the second cutting means.

8. Apparatus according to any one of the claims 4-7, in which the guide (15) is bent with a curvature, the sign of which is equal to that of the curvature of the circular knife (12) concerned.

9. Apparatus according to claim 5, in which the deboning path ascends with regard to the depositing path.

10. Apparatus according to claim 9, in which the second cutting means (13) is arranged to be active in the concave area of the said transition.

11. Apparatus according to any one of the preceding claims, further provided with means (30,36) for shifting a leg part, in particular a drumstick, on its support (8), from a position projecting transverse from the support to a retracted position.

12. Apparatus according to claim 11, in which the conveyor (8) is provided with means (18) for operating the moving means (30,36).

13. Apparatus according to claim 12, in which moving means (30,36) are stationarily arranged with regard to the conveyor and are provided with a pressure plate (36) which can be turned over from an outwardly tilted, non-active position to an inwardly tilted, active position.

14. Apparatus according to claim 13, in which the supports (8) are each directly or indirectly provided with an operating means (18) for the turnover plate (36) and in which the turnover plate is arranged to tilt under the influence of gravity from the active to the non-active position.

15. Apparatus according to claim 13 or 14, in which the turnover plate (36) is provided with an offset end portion (38) for detaining the leg part against upward movement with regard to the thigh support.

## Patentansprüche

1. Vorrichtung (1) zum Entbeinen der Beine oder Flügel von Schlachtgeflügel, insbesondere von Truthünern, umfassend einen endlosen Beförderer (6) für die genannten Teile, welcher Beförderer mit einer Anzahl Stützen (8) versehen ist, eine für jedes Teil, welche Stützen quer auf der Förderrichtung gelegen sind, und eine Einlegestrecke, eine Entbeinungsstrecke und eine Rückstrecke umfaßt, wobei die Entbeinungsvorrichtung weiter mit mit dem Beförderer mitbewegenden Entbeinungsmitteln versehen ist, die - in Prozeßrichtung betrachtet - seitlich von den Stützen gelegen sind, und mit Mitteln zum in Angriff mit den Entbeinungsmitteln bringen der Beinteile, mit einer Vorschneidvorrichtung umfassend Mittel (12, 13) zum quer Trennen der Muskel, insbesondere deren Sehnen, nahe dem Befestigungsende an dem Knochen des Beinteils, insbesondere des Unterschenkels, wobei die Trennmittel erste Schneidmittel (12) umfassen um die Muskel an einem ersten Teil des Beinumfangs und zweite Schneidmittel (13) um die Muskel an einem ergänzenden zweiten Teil des Beinumfangs zu trennen, **dadurch gekennzeichnet, daß** die Vorschneidvorrichtung (50) an der Übergangsstelle zwischen der Einlegestrecke und der Entbeinungsstrecke gelegen ist, und daß die ersten Schneidmittel (12) angeordnet sind um zumindest ein Unterteil des Beinumfangs anzugreifen und die zweiten Schneidmittel (13) angeordnet sind um zumindest ein Oberteil des Beines anzugreifen.

2. Vorrichtung nach Anspruch 1, wobei die Trennmittel (12, 13) eingerichtet sind zum quer und rundum Trennen der Muskel an dem Knochen des Beinteiles, insbesondere nahe seinem distalen Ende.

3. Vorrichtung nach Anspruch 1 oder 2, wobei die ersten und die zweiten Schneidmittel (12, 13) durch zwei Kreismesser gebildet sind, die in einer Vertikalfläche - in Prozeßrichtung betrachtet - nacheinander und obeneinder angeordnet sind und vorzugsweise derartig, daß dieselbe Horizontalfläche (S) beide Messer berührt oder durchschneidet.

4. Vorrichtung nach Anspruch 3, wobei bei zumindest einem der Kreismesser (12) eine in radialer Entfernung davon gelegene Führung (15) angeordnet ist, zum Andrücken des Beinteiles gegen das bezügliche Kreismesser.

5. Vorrichtung nach Anspruch 4, wobei das erste Schneidmittel (12) - in Prozeßrichtung betrachtet - stromaufwärts angeordnet ist und niedriger als das zweite Schneidmittel (13) liegt, und wobei die genannte Führung (15) über dem ersten Schneidmittel angeordnet ist.

6. Vorrichtung nach Anspruch 4 oder 5, wobei die Führung (15) unter der Einwirkung einer Feder (14) zu dem bezüglichen Schneidmittel (12) gespannt ist bis einen bestimmten Mindestabstand dazu.

7. Vorrichtung nach Anspruch 6, wobei die Führung (15) sich in Prozeßrichtung bis an der Drehachse (12a) des ersten Schneidmittels (12) vorbei erstreckt, vorzugsweise für zumindest einen Abschnitt des Teiles des Kreismessersumfanges des ersten Schneidmittels das dem zweiten Schneidmittel gegenübersteht.

8. Vorrichtung nach einem der Ansprüche 4-7, wobei die Führung (15) mit einer Krümmung gebogen ist, wovon das Zeichen gleich ist an dem der Krümmung des bezüglichen Kreismessers (12).

9. Vorrichtung nach Anspruch 5, wobei die Entbeinungsstrecke bezüglich der Einlegestrecke steigt.

10. Vorrichtung nach Anspruch 9, wobei das zweite Schneidmittel (13) angeordnet ist, um in dem Konkavgebiet des genannten Überganges wirksam zu sein.

11. Vorrichtung nach einem der vorgehenden Ansprüche, weiter mit Mitteln (30, 36) zum Verschieben eines Beinteiles, insbesondere eines Unterschenkels, auf der betreffenden Stütze (8) aus einem quer von der Stütze hervorragenden Stand zu einem zurückgezogenen Stand, versehen.

12. Vorrichtung nach Anspruch 11, wobei der Beförderer (8) mit Mitteln (18) zum Bedienen der Verschiebungsmittel (30, 36) versehen ist.

13. Vorrichtung nach Anspruch 12, wobei die Verschiebungsmittel (30, 36) stationär bezüglich des Beförders angeordnet sind und mit einer Andruckplatte (36), die von einem auswärts gekippten inaktiven Stand zu einem einwärts gekippten aktiven Stand umzuklappen ist, versehen sind.

14. Vorrichtung nach Anspruch 13, wobei die Stützen (8) jede direkt oder indirekt mit einem Bedienungsmittel (18) für die Umklappplatte (36) versehen sind und wobei die Umklappplatte angeordnet ist um unter Einfluß der Schwerkraft von dem aktiven zu dem inaktiven Stand zu kippen.

15. Vorrichtung nach Anspruch 13 oder 14, wobei die Umklappplatte (36) mit einem umgesetzten Endabschnitt (38) versehen ist, zum gegen aufwärtse Versetzung bezüglich des Oberschenkelknochens Aufhalten des Beinteiles.

## Revendications

1. Appareil (1) pour désosser des parties telles que des pattes ou ailes de volailles abattues, en particulier des dindes, comprenant un convoyeur continu pour lesdites parties, le convoyeur étant muni d'une pluralité de supports (8), un pour chaque partie, les supports étant disposés transversalement à la direction de transport, et comprend une trajectoire de dépose, une trajectoire de désossage et une trajectoire de retour, dans lequel l'appareil à désosser est en outre muni de moyens de désossage se déplaçant le long du convoyeur, qui - observé dans la direction du traitement - sont disposés sur le côté des supports, et avec des moyens pour placer les parties de pattes en prise avec les moyens de désossage, un appareil de prédécoupage, comprenant des moyens (12, 13) pour séparer transversalement les muscles, en particulier leurs tendons, près de l'extrémité d'attache sur l'os de la partie patte, en particulier le pilon, dans lequel les moyens de séparation comprennent des premiers moyens de découpage (12), pour séparer les muscles sur une première partie de la circonférence de l'os, et des deuxièmes moyens de découpage (13), pour séparer les muscles en une deuxième partie complémentaire de la circonférence de l'os, **caractérisé en ce que** l'appareil de prédécoupage (50) est disposé à l'emplacement de la transition entre la trajectoire de dépose et la trajectoire de désossage, et **en ce que** les premiers moyens de découpage (12) sont agencés pour venir en prise avec au moins une partie inférieure de la circonférence de l'os et les deuxièmes moyens de découpage (13) sont agencés pour venir en prise avec au moins une partie supérieure de l'os.

2. Appareil selon la revendication 1, dans lequel les moyens de séparation (12, 13) sont adaptés pour séparer les muscles se trouvant sur l'os de la partie patte, transversalement et sur tout le pourtour, en particulier près de l'extrémité distale de l'os.

3. Appareil selon la revendication 1 ou 2, dans lequel les premiers et deuxièmes moyens de découpage (12, 13) sont formés par deux lames circulaires, agencées successivement - si l'on observe dans la direction du traitement - et l'une au-dessus de l'autre dans un plan vertical et, de préférence, d'une manière telle que le même plan horizontal (S) est en contact avec les deux lames ou les coupe.

4. Appareil selon la revendication 3, dans lequel un guide (15) est agencé en au moins l'une des lames circulaires (12), ce guide étant placé à une distance radiale de celle-ci, pour presser la partie patte contre la lame circulaire concernée.

5. Appareil selon la revendication 4, dans lequel les premiers moyens de découpage (12) - en observant dans la direction de traitement - sont agencés en amont et sont à un niveau inférieur à celui des deuxièmes moyens de découpage (13), et dans lequel ledit guide (15) est agencé au-dessus des premiers moyens de découpage.

6. Appareil selon la revendication 4 ou 5, dans lequel, sous l'action d'un ressort 14, le guide (15) est déplacé vers les moyens de découpage (12) en question, jusqu'à venir à une distance minimale spécifiée de ceux-ci.

7. Appareil selon la revendication 6, dans lequel le guide (15) s'étend dans la direction de traitement jusqu'au-delà de l'axe de rotation (12a) des premiers moyens de découpage (12), de préférence pour au moins une portion de la partie de la circonférence de la lame circulaire des premiers moyens de découpage placés en regard des deuxièmes moyens de découpage.

8. Appareil selon l'une quelconque des revendications 4 à 7, dans lequel le guide (15) est cintré, avec une courbure dont le signe est égal à celui de la courbure de la lame circulaire (12) concernée.

9. Appareil selon la revendication 5, dans lequel la trajectoire de désossage monte par rapport à la trajectoire de dépose.

10. Appareil selon la revendication 9, dans lequel les deuxièmes moyens de découpage (13) sont agencés pour être actifs dans la zone concave de ladite transition.

11. Appareil selon l'une quelconque des revendications précédentes, pourvu en outre de moyens (30, 36) pour mouvoir une partie de patte, en particulier un pilon, sur son support (8), depuis une position en saillie transversalement depuis le support, jusqu'à une position rétractée.

12. Appareil selon la revendication 11, dans lequel le convoyeur (8) est muni de moyens (18) pour actionner les moyens de déplacement (30, 36).

13. Appareil selon la revendication 12, dans lequel les moyens de déplacement (30, 36) sont agencés de façon stationnaire par rapport au convoyeur et sont munis d'une plaque de pression (36) qui peut être retournée depuis une position non active, inclinée vers l'extérieur, vers une position active, inclinée vers l'intérieur.

14. Appareil selon la revendication 13, dans lequel les supports (8) sont chacun munis directement ou indirectement de moyens d'actionnement (18) pour la plaque de retournement (36), et dans lequel la plaque de retournement est agencée pour s'incliner sous l'influence de la gravité, en passant de la position active à la position non active.

15. Appareil selon la revendication 13 ou 14, dans lequel la- plaque de retournement (36) est munie d'une partie d'extrémité (38) décalée, pour retenir la partie patte contre tout déplacement vers le haut par rapport au support de cuisse.
